# FASCICULE DE BREVET EUROPEEN

(11) **EP 2 993 798 B1**
(45) Date de publication et mention de la délivrance du brevet: **19.07.2017**
(21) Numéro de dépôt: 15182852.2
(22) Date de dépôt: 28.08.2015
(51) Int. Cl.: H04B 1/04, G01S 13/00, H01Q 21/00, H04B 1/403, H04B 1/401

(54) **MODULE D'ÉMISSION ET PROCÉDÉ ASSOCIÉ DE MISE EN OEUVRE DE MODES DE FONCTIONNEMENT MULTIPLES**
SENDEMODUL UND ENTSPRECHENDES VERFAHREN ZUR UMSETZUNG MULTIPLER BETRIEBSMODI
TRANSMITTER MODULE AND ASSOCIATED METHOD FOR CARRYING OUT DIFFERENT OPERATING MODES

(30) Priorité: 04.09.2014 FR 1401976
(43) Date de publication de la demande: 09.03.2016
(73) Titulaire: THALES, 92400 Courbevoie (FR); United Monolithic Semiconductor S.A.S., 91140 Villebon-sur-Yvette (FR)
(72) Inventeur: TOLANT, Clément, 76520 YMARE (FR); CAMIADE, Marc, 91440 BURES SUR YVETTE (FR)
(74) Mandataire: Lavoix

(56) Documents cités:
- EP-A2- 1 976 134

## Description

La présente invention concerne un module d'émission adapté pour associer deux modes de fonctionnement, et incluant :
- un commutateur comprenant une entrée adaptée pour recevoir un signal à émettre, à commuter entre deux sorties correspondant chacune à une voie d'émission ;
- un circulateur comprenant au moins un premier bras, un deuxième bras et un troisième bras distincts ;
- une première voie d'émission et une seconde voie d'émission comprenant chacune une première extrémité reliée audit commutateur et une seconde extrémité reliée audit circulateur ;
ledit commutateur étant adapté pour relier sélectivement l'entrée du commutateur, dans un premier mode de fonctionnement, à la première extrémité de la première voie d'émission et dans un second mode de fonctionnement, à la première extrémité de la seconde voie d'émission. L'invention est défini par les revendications. De tels modules d'émission équipent notamment des radars à antenne active.

Ils permettent d'offrir deux modes de fonctionnement distincts à l'aide du radar, typiquement un mode radar et un mode de fonctionnement en communication liaison montante avec un destinataire, par exemple un équipement de réception d'un missile.

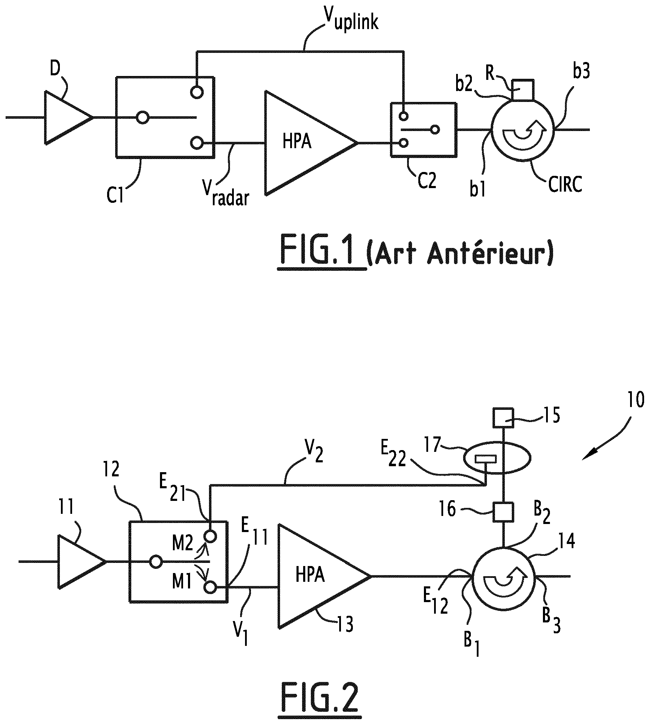

Une vue d'un module d'émission pour un radar à antenne active de l'art antérieur proposant deux tels modes de fonctionnement est représentée sur la figure 1.

Ce module d'émission comporte un amplificateur D, dit amplificateur Driver, un premier commutateur C1, un second commutateur C2 et deux voies d'émission V_{radar} et Vᵤₚₗᵢₙₖ situées entre les commutateurs C1 et C2.

La première voie d'émission V_{radar}, utilisée pour l'émission radar, comporte généralement un amplificateur HPA.

La seconde voie d'émission Vᵤₚₗᵢₙₖ est utilisée pour l'émission de type liaison montante.

En aval du commutateur C2, un circulateur CIRC comportant trois bras d'entrée/sortie b1, b2, b3, également appelés « ports », est en outre disposé. Le circulateur CIRC est adapté pour véhiculer, selon un unique sens de rotation, les signaux radiofréquences présents sur les trois bras. Le bras b3 est généralement relié à un circuit comportant un élément rayonnant de l'antenne active. Le bras b2 suivant le bras b3 dans le sens unique de rotation, est connecté à une charge de dissipation R de valeur typique égale à 50 ohms. La sortie du commutateur C2 est connectée au bras b1 succédant, dans le sens unique de rotation, au bras b2.

La fonction du circulateur CIRC est d'isoler la partie du module d'émission en amont du circulateur CIRC des signaux réfléchis provenant de l'antenne, en les dirigeant vers la charge de dissipation.

En mode de fonctionnement radar, les commutateurs C1 et C2 sont commandés de façon à être connectés à la voie V_{radar} (et donc à être isolés de la voie Vᵤₚₗᵢₙₖ). Le signal radar ainsi amplifié par les amplificateurs D et HPA en cascade est ensuite transmis par le circulateur CIRC au circuit comportant l'élément rayonnant associé au module d'émission.

En mode liaison montante les commutateurs C1 et C2 sont commandés de façon à être connectés à la voie Vᵤₚₗᵢₙₖ (et donc à être isolés de la voie V_{radar}). Le signal de liaison montante ainsi amplifié par l'amplificateur D est ensuite transmis par le circulateur CIRC au circuit comportant l'élément rayonnant associé au module d'émission.

Dans l'art antérieur, des modules d'émission de ce type peuvent comporter un coupleur à la place du commutateur, notamment lorsque la puissance d'émission en mode de type liaison montante peut tolérer une valeur de puissance égale à la puissance de sortie de l'amplificateur Driver diminuée au moins de la valeur du couplage. Le document EP1976134A2 décrit un module d'émission avec deux voies d'émission reliées au même bras d'un circulateur par un commutateur. Quel que soit le dispositif utilisé (coupleur ou commutateur) entre l'amplificateur HPA et le circulateur CIRC, ce dispositif introduit une perte d'insertion qui limite le niveau de puissance émis en mode de fonctionnement radar.

L'invention a pour objectif de remédier à cet inconvénient.

A cet effet, suivant un premier aspect, l'invention propose un module d'émission du type précité caractérisé en ce que la seconde extrémité de la première voie d'émission est reliée au premier bras du circulateur et la seconde extrémité de la seconde voie d'émission est reliée au deuxième bras du circulateur.

La présente invention propose ainsi d'utiliser un bras du circulateur pour réaliser l'injection du signal issu de la seconde voie d'émission, ce qui permet d'éviter l'introduction de dispositifs supplémentaires (coupleur, commutateur) sur la première voie, ou voie principale, et permet ainsi de réduire la perte d'insertion en mode de fonctionnement radar.

Dans les modes de réalisation envisagés, le module d'émission suivant l'invention comporte en outre une ou plusieurs des caractéristiques suivantes :
- le premier mode de fonctionnement est un mode de fonctionnement radar et le second mode de fonctionnement est un mode de fonctionnement liaison montante ;
- le circulateur comprend une ligne circulaire le long de laquelle les trois bras sont répartis, le circulateur étant adapté pour faire circuler un signal dans un unique sens de rotation allant du troisième bras vers le deuxième bras, du deuxième bras vers le premier bras, et du premier bras vers le troisième bras ;
- la première voie d'émission comporte un amplificateur comprenant au moins un transistor, ledit module d'émission étant adapté pour commander l'application d'une valeur de polarisation sur l'électrode d'entrée du transistor et/ou d'une valeur de polarisation sur l'électrode de sortie du transistor, variable selon le mode de fonctionnement choisi ;
- en mode de fonctionnement liaison montante, ladite valeur de polarisation est adaptée pour rendre la sortie de l'amplificateur assimilable à un court-circuit renvoyant sensiblement sans perte les signaux en provenance du premier bras du circulateur ; et/ou
- en mode de fonctionnement radar, ledit module d'émission est adapté pour recevoir une valeur de commande de puissance de signal à émettre et pour ajuster ladite valeur de polarisation en fonction de ladite valeur de commande reçue ;
- le deuxième bras du circulateur est relié à la première voie d'émission et à une charge de dissipation ;
- le module d'émission comporte :
   - un atténuateur entre la seconde extrémité de la seconde voie d'émission et le deuxième bras du circulateur ; et/ou
   - un coupleur adapté pour coupler la seconde voie d'émission et le deuxième bras du circulateur ; et/ou
   - un autre commutateur adapté pour, dans le premier mode de fonctionnement, isoler du deuxième bras du circulateur, la première extrémité de la seconde voie d'émission et pour, dans le second mode de fonctionnement, connecter le deuxième bras du circulateur et la seconde extrémité de la seconde voie d'émission ; et/ou
   - un autre circulateur comprenant des premier, deuxième et troisième bras distincts et adapté pour faire circuler un signal dans un unique sens de rotation allant du troisième bras vers le deuxième bras, du deuxième bras vers le premier bras, et du premier bras vers le troisième bras le premier bras étant relié à la seconde extrémité de la seconde voie d'émission, le troisième bras étant relié au deuxième bras du circulateur et le deuxième bras étant relié à la charge de dissipation ;
- le module est adapté pour recevoir une valeur de commande de puissance de signal, et dans lequel, en mode de fonctionnement liaison montante, ladite valeur de commande agit sur le niveau d'atténuation de l'atténuateur.

Suivant un deuxième aspect, la présente invention propose un procédé de mise en oeuvre de modes de fonctionnement multiples dans un module d'émission incluant :
- un commutateur comprenant une entrée adaptée pour recevoir un signal à émettre à commuter entre deux sorties correspondant chacune à une voie d'émission ;
- un circulateur comprenant au moins un premier bras, un deuxième bras et un troisième bras distincts ;
- une première voie d'émission et une seconde voie d'émission comprenant chacune une première extrémité reliée audit commutateur et une seconde extrémité reliée audit circulateur.

Le procédé de mise en oeuvre comprend une étape consistant à relier sélectivement l'entrée du commutateur, dans le premier mode de fonctionnement, à la première extrémité de la première voie d'émission et, dans le second mode de fonctionnement, à la première extrémité de la seconde voie d'émission, ledit procédé étant caractérisé en ce qu'il comprend une étape de transmission de signal dans le circulateur selon laquelle le premier bras du circulateur est relié à la seconde extrémité de la première voie d'émission et le second bras du circulateur est relié à la seconde extrémité de la seconde voie d'émission.

Ces caractéristiques et avantages de l'invention apparaîtront à la lecture de la description qui va suivre, donnée uniquement à titre d'exemple, et faite en référence aux dessins annexés, sur lesquels :
- la figure 1 représente un module d'émission pour un radar avec deux modes de fonctionnement selon l'art antérieur ;
- la figure 2 représente un module d'émission pour un radar avec deux modes de fonctionnement dans un mode de réalisation de l'invention ;
- la figure 3 représente un module d'émission pour un radar avec deux modes de fonctionnement dans un autre mode de réalisation de l'invention ;
- la figure 4 représente un module d'émission pour un radar avec deux modes de fonctionnement dans un autre mode de réalisation de l'invention ;
- la figure 5 est un organigramme d'étapes d'un procédé de mise en oeuvre de deux modes de fonctionnement dans un mode de réalisation de l'invention.

Des références identiques dans des figures différentes désignent des éléments similaires.

La figure 2 est une vue partielle d'un module d'émission 10 représentant la fonction d'émission associée, pouvant faire partie d'un module d'émission /réception (TR module), destinée à être intégrée dans un radar dans un mode de réalisation de l'invention.

Le radar considéré à titre d'illustration de l'invention, est un radar à antenne active comportant N éléments rayonnants. L'antenne active est fixe, ou alors, comme dans le cas considéré, est animée d'un mouvement de rotation. Le nombre N peut aller de plusieurs dizaines à plusieurs milliers, par exemple N= 3000. Chacun desdits éléments rayonnants ou chaque éventuel regroupement des dits éléments rayonnants peut être associé à un module d'émission/réception.

Le radar est adapté pour émettre des signaux radar (puis en analyser les réflexions) ou des signaux de type liaison montante. Par exemple, la puissance des signaux émis en mode radar est de l'ordre de quelques watts à quelques dizaines de watts, et la puissance des signaux émis en mode liaison montante est de l'ordre de quelques milliwatts à quelques watts.

Dans le mode de réalisation considéré en référence à la figure 2, un module d'émission 10 comporte un premier amplificateur 11, un commutateur 12, un circulateur 14 et deux voies d'émission V1 et V2 parallèles situées entre le commutateur 12 et le circulateur 14. La voie d'émission V1 désigne dans la suite du document la voie d'émission V_{radar}. La voie d'émission V2 désigne dans la suite du document la voie d'émission V_{up linkr}.

L'entrée du commutateur 12 est connectée à la sortie de l'amplificateur 11.

La voie d'émission V1 a deux extrémités opposées E₁₁ et E₁₂.

La voie d'émission V1 comporte un amplificateur 13, à fort gain, par exemple de 10 à 30 dB.

La voie d'émission V2 a deux extrémités opposées E₂₁ et E₂₂.

Le circulateur 14, muni de sa charge de dissipation 15, est adapté pour isoler l'amplificateur 13 des signaux provenant des réflexions engendrées par l'antenne lors de l'émission. Le circulateur 14 comporte au moins trois bras d'entrée/sortie B₁, B₂, B₃.

Le circulateur 14 comporte une ligne de propagation circulaire le long de laquelle sont disposés trois bras B₁, B₂, B₃. Le circulateur 14 est adapté pour faire circuler dans la ligne de propagation, selon un unique sens de rotation, les signaux radiofréquences qu'il reçoit depuis les bras.

Ce sens de rotation unique est le suivant : de B₃ vers B₂, de B₂ vers B₁, de B₁ vers B₃.

Dans le mode de réalisation considéré, le bras B₃ est relié à un circuit comportant un élément rayonnant de l'antenne active (non représentée), via un duplexeur, par exemple, aiguillant les signaux reçus par ledit élément rayonnant vers la voie de réception du module d'émission/réception.

Le bras B₂ du circulateur 14 est en liaison avec la charge de dissipation 15 (de valeur par exemple égale à 50 ohms), via un coupleur 17 placé en série entre la charge 15 et le circulateur 14. Le signal issu de l'extrémité E₂₂ de la voie V2 est injecté à travers la voie couplée du coupleur 17 en direction du circulateur 14.

En outre dans le mode de réalisation considéré, un atténuateur 16, (pouvant être réglable dans certains modes de réalisation) est disposé entre le coupleur 17 et le bras B₂.

Le bras B₁ est connecté à l'extrémité E₁₂ de la voie d'émission V1.

Le module d'émission 10 est adapté pour fonctionner selon un mode sélectionné parmi un mode M1 et un mode M2.

Le module d'émission 10 est adapté pour, lorsque le mode M1 est sélectionné (par exemple suite à la réception d'une commande déclenchée de manière automatisée par le radar ou déclenchée par un utilisateur du radar), commander le commutateur 12 de sorte que la sortie du commutateur 12 soit connectée à l'extrémité E₁₁ de la voie d'émission V1.

Le module d'émission 10 est adapté pour, lorsque le mode M2 est sélectionné (par exemple suite à la réception d'une commande déclenchée de manière automatisée par le radar ou déclenchée par un utilisateur du radar), commander le commutateur 12 de sorte que la sortie du commutateur 12 soit connectée à l'extrémité E₂₁ de la voie d'émission V2.

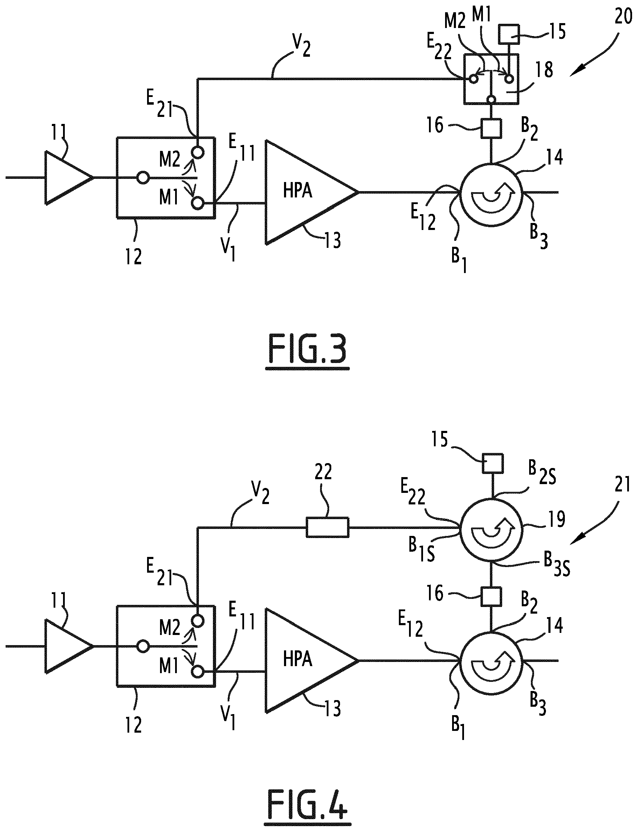

Un autre mode de réalisation selon l'invention d'un module d'émission 20 est représenté en figure 3, dans lequel le coupleur 17 a été remplacé par un deuxième commutateur, référencé 18. L'entrée du commutateur 18 est connectée au bras B₂ via l'atténuateur 16 dans le cas présent.

Le module d'émission 20 est adapté pour, lorsque le mode M1 est sélectionné, commander le commutateur 18 de sorte que la sortie du commutateur 18 soit connectée à la charge de dissipation 15.

Le module d'émission 20 est adapté pour, lorsque le mode M2 est sélectionné, commander le commutateur 18 de sorte que la sortie du commutateur 18 soit connectée à l'extrémité E₂₂ de la voie V2.

Dans un mode de réalisation d'un module d'émission 21 selon l'invention représenté en figure 4, le coupleur 17 est remplacé par un circulateur 19, comportant trois bras successifs B_{1S}, B_{2S} et B_{3S} selon le sens unique de circulation dans ledit circulateur.

Le bras B_{1S} est relié à la seconde extrémité E₂₂ de la seconde voie d'émission V2, le bras B_{3S} est relié au bras B₂ du circulateur 14 et le bras B_{2S} est relié à la charge de dissipation 15. Dans ce mode de réalisation, un atténuateur 22, de valeur d'atténuation fixe ou ajustable, est en outre inséré dans la voie V2.

Il est à noter que cet atténuateur 22 est optionnel.

Le circulateur 19 assure ainsi la transmission du signal de la seconde extrémité (E₂₂) de la seconde voie d'émission (V2) vers le bras (B₂) du circulateur (14). Le bras B_{2S} du circulateur 19, relié à la charge de dissipation (15), permet ainsi le fonctionnement selon le mode M1 en reliant le bras B₂ du circulateur 14 à la charge de dissipation 15, à travers, dans le cas considéré, l'atténuateur 16 et le circulateur 19.

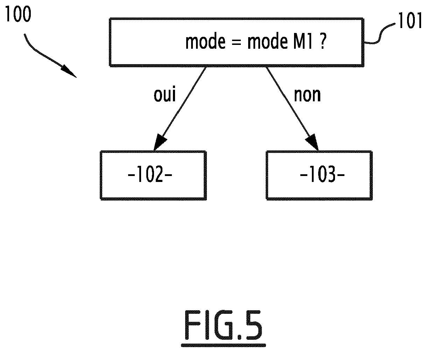

Considérons à présent le fonctionnement du module d'émission 10 (ou 20 ou 21) en référence à l'organigramme de la figure 5.

Dans une première étape 101, le module d'émission 10 reçoit une commande de fonctionnement selon un mode de fonctionnement sélectionné parmi les modes M1, M2.

Si à l'étape 101, le mode M1 est sélectionné, alors dans une étape 102, le commutateur 12 est commandé de sorte que l'entrée du commutateur 12 est connectée à l'extrémité E₁₁ de la voie d'émission V1, reliant ainsi la sortie du premier amplificateur 11 à l'entrée de l'amplificateur 13 de la voie d'émission V1. Dans le mode de réalisation illustrée en figure 3, le commutateur 18 est en outre commandé de sorte que la sortie du commutateur 18 est connectée à la charge de dissipation 15.

L'extrémité E₂₁ de la voie V2 est alors isolée de la sortie de l'amplificateur 11, et dans le mode de réalisation illustrée en figure 3, l'extrémité E₂₂ de la voie V2 est en outre isolée du bras B₂.

Un signal radiofréquence, typiquement un signal radar en mode pulsé ou continu, alors présent à l'entrée de l'amplificateur 11, est transmis à la voie d'émission V1 en entrée du HPA 13, puis est transmis à l'entrée du circulateur 14 via le bras B₁. Il sort du circulateur 14 par le bras B₃ à destination de l'antenne.

Si à l'étape 101, le mode M2 est sélectionné, alors dans une étape 103, le commutateur 12 est positionné de sorte que la sortie du commutateur 12 est connectée à l'extrémité E₂₁ de la voie d'émission V2. Dans le mode de réalisation illustré en figure 3, le commutateur 18 est en outre commandé de sorte que la sortie du commutateur 18 est connectée à l'extrémité E₂₂ de la voie d'émission V2 (la charge de dissipation est alors isolée du bras B₂).

Un signal radiofréquence, typiquement de type liaison montante, qui est alors présent à l'entrée de l'amplificateur 11 est transmis à la voie d'émission V2 qui véhicule le signal radiofréquence jusqu'à l'entrée B₂ du circulateur 14 ; le signal radiofréquence sort du circulateur 14 par le bras B₁ en direction de la sortie de l'amplificateur HPA 13.

En mode M1, un signal radiofréquence en provenance de l'antenne entrant dans le circulateur 14 via le bras B₃, sort principalement du circulateur par le bras B₂ puis est majoritairement absorbé par la charge de dissipation 15.

Dans le mode de réalisation de la figure 3, en mode M2, la charge de dissipation étant alors isolée du bras B₂, un tel signal issu de l'antenne peut remonter la voie d'émission V2. Il est toutefois atténué par l'atténuateur 16.

Par exemple, les signaux considérés ci-dessus transmis sur les voies d'émission V1 et V2 sont des signaux dans la plage allant de 1 à 20 GHz.

L'invention permet ainsi de réaliser l'injection du signal issu de la voie d'émission V2, en mode M2 vers l'antenne, via un autre bras de circulateur que celui directement relié à la voie d'émission V1. Le niveau de puissance en mode M1 subit ainsi moins de perte d'insertion que dans l'art antérieur.

Pour éviter qu'une partie du signal transmis en mode M2 depuis la voie d'émission V2 ne soit transmise à la voie d'émission V1 par le bras B1 du circulateur 14, du fait de son sens de rotation, le module d'émission 10 est en outre adapté, dans un mode de réalisation, pour qu'en mode M2, un signal arrivant sur la sortie de l'amplificateur 13 depuis le bras B₁ du circulateur soit réfléchi par cette sortie de l'amplificateur 13, afin d'être réinjecté dans le circulateur 14 par le bras B₁ et être transmis à l'antenne depuis le bras B₃.

Dans un mode de réalisation de cette disposition, l'amplificateur 13 comporte au moins un transistor doté d'une électrode d'entrée (nommée grille dans le cas d'un transistor à effet de champ) et d'une électrode de sortie (nommée drain dans le cas d'un transistor à effet de champ), et le module d'émission 10 est adapté pour, dans le mode M2, régler la polarisation de l'électrode d'entrée et/ou de l'électrode de sortie afin que la sortie du transistor soit réflexive par rapport à un signal en provenance du bras B₁, voire soit équivalente à un court-circuit, apte à réaliser un renvoi quasiment sans perte du signal en provenance du bras B₁.

Par exemple, la plage de polarisation du drain en fonctionnement (mode M1) est [Vd1, Vd2] (par exemple Vd1= 25 V, Vd2= 50 V) et la plage de polarisation de la grille est [Vg1, Vg2] (par exemple Vg1= -3 V, Vg2= -1 V). En mode M2, dans un mode de réalisation, la polarisation du drain sera réduite, pouvant aller jusqu'à zéro volt. La polarisation de la grille sera choisie afin de maximiser le coefficient de réflexion en sortie de l'amplificateur 11.

Dans un mode de réalisation, lorsque l'amplificateur 13 comporte plusieurs étages en cascade, ce réglage de polarisation en mode M2 est effectué au moins sur les transistors du dernier étage avant le bras B₁.

Dans un mode de réalisation, le module d'émission selon l'invention comporte en outre un atténuateur, disposé entre le circulateur 14 et le circulateur 19, tel que l'atténuateur 16 en figure 4, et dont la valeur d'atténuation, selon les modes de réalisation, est fixe, ou est ajustable en fonction d'un niveau de puissance à émettre. Le module d'émission 10 est adapté pour ajuster le niveau d'atténuation de cet atténuateur variable en fonction d'une commande reçue.

Dans un mode de réalisation, l'amplificateur 13 comportant un ou plusieurs transistor (s), le module d'émission 10 est adapté pour recevoir une valeur de commande de puissance à émettre par l'émetteur en mode M1 (cette indication est fournie par exemple par un opérateur du radar ou par le radar de manière automatisée), et pour ajuster les tensions de polarisation de l'électrode d'entrée du (ou des) transistor (s) et/ou de l'électrode de sortie du (ou des) transistor (s) de l'amplificateur 13 en fonction du niveau de puissance indiqué, qui est la puissance maximum ou une puissance réduite. Par exemple, la plage de polarisation du drain de fonctionnement est [Vd1, Vd2] (par exemple Vd1= 25 V, Vd2= 50 V) et que la plage de polarisation de la grille est [Vg1, Vg2] (par exemple Vg1= -3 V, Vg2= -1 V). Si en mode M1, la puissance maximum est délivrée pour une polarisation du drain à Vd₀, par exemple égale à 40V et une polarisation de la grille à Vg₀, par exemple égale à -2V, alors une puissance réduite sera obtenue en baissant les polarisations du drain et de la grille par rapport à Vd₀ et Vg₀ respectivement.

On notera qu'en mode M2, la puissance émise peut, dans un mode de réalisation, être réglée en ajustant les tensions de polarisation de l'électrode d'entrée et/ou de l'électrode de sortie d'un (ou des) transistor (s) de l'amplificateur 11, en fonction du niveau de puissance cible indiqué de manière similaire à ce qui a été indiqué ci-dessus en référence à l'amplificateur 13.

Ainsi, en mode de fonctionnement radar (mode M1), la valeur de commande agit sur la polarisation du transistor de l'amplificateur HPA, en mode de fonctionnement liaison montante (mode M2), cette valeur de commande agit sur le niveau d'atténuation de l'atténuateur variable On notera que le mode M2 peut en outre être utilisé pour transmettre un signal radiofréquence radar via la voie d'émission V2, lorsque par exemple la puissance du signal radar émis doit être inférieure à un seuil donné.

La présente invention propose ainsi un module d'émission offrant de fonctionner à l'aide d'une voie sélectionnée parmi des voies parallèles, comportant une voie principale V1 (pour l'émission radar par exemple) et une voie secondaire (pour l'émission en liaison montante par exemple), sans modification de performance et notamment sans introduction de pertes d'insertion, dans la première voie V1.

L'invention ci-dessus a été décrite en référence à un radar à antennes actives, mais elle est bien sûr applicable à un radar à antenne(s) non active(s).

Plus généralement, l'invention n'est pas cantonnée au domaine des radars et est applicable à tout type de module d'émission, notamment radiofréquence, comportant des voies parallèles associées chacune à un mode de fonctionnement respectif.

## Revendications

1. Module d'émission (10, 20, 21), ledit module étant adapté pour associer deux modes de fonctionnement, et incluant
- un commutateur (12) comprenant une entrée adaptée pour recevoir un signal à émettre à commuter entre deux sorties correspondant chacune à une voie d'émission (V1,V2),
- un circulateur (14) comprenant au moins un premier bras, un deuxième bras et un troisième bras (B₁, B₂, B₃) distincts ;
- une première voie d'émission (V1) et une seconde voie d'émission (V2) comprenant chacune une première extrémité reliée audit commutateur et une seconde extrémité reliée audit circulateur ;
ledit commutateur étant adapté pour relier sélectivement l'entrée du commutateur, dans un premier mode de fonctionnement, à la première extrémité (E₁₁) de la première voie d'émission (V1) et, dans un second mode de fonctionnement, à la première extrémité (E₂₁) de la seconde voie d'émission (V2) ;
ledit module d'émission étant **caractérisé en ce que** la seconde extrémité (E₁₂) de la première voie d'émission (V1) est reliée au premier bras (B₁) du circulateur et la seconde extrémité (E₂₂) de la seconde voie d'émission (V2) est reliée au deuxième bras (B₂) du circulateur.

2. Module d'émission (10, 20, 21) selon la revendication 1, dans lequel le premier mode de fonctionnement est un mode de fonctionnement radar et le second mode de fonctionnement est un mode de fonctionnement liaison montante.

3. Module d'émission (10, 20, 21) selon la revendication 2, dans lequel le circulateur (14) comprend une ligne circulaire le long de laquelle les trois bras sont répartis, le circulateur étant adapté pour faire circuler un signal dans un unique sens de rotation allant du troisième bras (B₃) vers le deuxième bras (B₂), du deuxième bras (B₂) vers le premier bras (B₁), et du premier bras (B₁) vers le troisième bras (B₃).

4. Module d'émission (10, 20, 21) selon la revendication 2 ou 3, dans lequel la première voie d'émission (V1) comporte un amplificateur (13) comprenant au moins un transistor, ledit module d'émission étant adapté pour commander l'application d'une valeur de polarisation sur l'électrode d'entrée du transistor et/ou d'une valeur de polarisation sur l'électrode de sortie du transistor, variable selon le mode de fonctionnement choisi.

5. Module d'émission (10, 20, 21) selon la revendication 4, dans lequel :
- en mode de fonctionnement liaison montante, ladite valeur de polarisation est adaptée pour rendre la sortie de l'amplificateur (13) assimilable à un court-circuit renvoyant sensiblement sans perte les signaux en provenance du premier bras (B₁) du circulateur (14) ; et/ou
- en mode de fonctionnement radar, ledit module d'émission est adapté pour recevoir une valeur de commande de puissance de signal à émettre et pour ajuster ladite valeur de polarisation en fonction de ladite valeur de commande reçue.

6. Module d'émission (10, 20, 21) selon l'une quelconque des revendications 2 à 5, dans lequel le deuxième bras (B₂) du circulateur (14) est relié à la première voie d'émission (V1) et à une charge de dissipation (15).

7. Module d'émission (10, 20, 21) selon l'une quelconque des revendications 2 à 6, dans lequel le module d'émission comporte :
- un atténuateur (16) entre la seconde extrémité (E₂₂) de la seconde voie d'émission (V2) et le deuxième bras (B₂) du circulateur ; et/ou
- un coupleur (17) adapté pour coupler la seconde voie d'émission et le deuxième bras du circulateur ; et/ou
- un autre commutateur (18) adapté pour, dans le premier mode de fonctionnement, isoler du deuxième bras (B₂) du circulateur (14), la première extrémité (E₂₁) de la seconde voie d'émission (V2) et pour, dans le second mode de fonctionnement, connecter le deuxième bras (B₂) du circulateur (14) et la seconde extrémité (E₂₂) de la seconde voie d'émission (V2) ; et/ou
- un autre circulateur (19) comprenant des premier, deuxième et troisième bras (B₁ₛ, B₂ₛ, B₃ₛ) distincts et adapté pour faire circuler un signal dans un unique sens de rotation allant du troisième bras (B₃ₛ) vers le deuxième bras (B₂ₛ), du deuxième bras (B₂ₛ) vers le premier bras (B₁ₛ), et du premier bras (B₁ₛ) vers le troisième bras (B₃ₛ) le premier bras (B₁ₛ) étant relié à la seconde extrémité (E₂₂) de la seconde voie d'émission (V2), le troisième bras (B₃ₛ) étant relié au deuxième bras (B₂) du circulateur (14) et le deuxième bras (B₂ₛ) étant relié à la charge de dissipation (15).

8. Module d'émission (10, 20, 21) selon la revendication 7, adapté pour recevoir une valeur de commande de puissance de signal, et dans lequel, en mode de fonctionnement liaison montante, ladite valeur de commande agit sur le niveau d'atténuation de l'atténuateur (16).

9. Procédé de mise en oeuvre de modes de fonctionnement multiples dans un module d'émission (10, 20, 21), adapté pour associer deux modes de fonctionnement, et incluant
- un commutateur (12) comprenant une entrée adaptée pour recevoir un signal à émettre à commuter entre deux sorties correspondant chacune à une voie d'émission,
- un circulateur (14) comprenant au moins un premier bras, un deuxième bras et un troisième bras (B₁, B₂, B₃) distincts ;
- une première voie d'émission (V1) et une seconde voie d'émission (V2) comprenant chacune une première extrémité reliée audit commutateur et une seconde extrémité reliée audit circulateur ;
ledit procédé comprenant une étape de relier l'entrée du commutateur sélectivement, dans le premier mode de fonctionnement, à la première extrémité (E₁₁) de la première voie d'émission (V1) et, dans le second mode de fonctionnement, l'entrée du commutateur à la première extrémité (E₂₁) de la seconde voie d'émission (V2) ;
ledit procédé étant **caractérisé en ce qu'**il comprend une étape de circulation de signal dans le circulateur selon laquelle le premier bras (B₁) du circulateur est reliée à la seconde extrémité (E₁₂) de la première voie d'émission (V1) et le deuxième bras (B₂) du circulateur est relié à la seconde extrémité (E₂₂) de la seconde voie d'émission (V2).

10. Procédé selon la revendication 9, adapté pour être utilisé selon un premier mode de fonctionnement radar ou selon un second mode de fonctionnement liaison montante.

11. Procédé selon la revendication 10, selon lequel l'étape de circulation est adaptée à faire circuler un signal dans un unique sens de rotation allant du troisième bras, (B₃) vers le deuxième bras (B₂), du deuxième bras (B₂) vers le premier bras (B₁), et du premier bras (B₁) vers le troisième bras (B₃).

12. Procédé selon la revendication 11, selon lequel la première voie d'émission (V1) comporte un amplificateur (13) comprenant au moins un transistor, et comprenant une étape de commande d'application d'une valeur de polarisation sur l'électrode d'entrée du transistor et/ou d'une valeur de polarisation sur l'électrode de sortie du transistor, variable selon le mode de fonctionnement choisi, selon lequel :
- en mode de fonctionnement liaison montante, ladite valeur de polarisation rend la sortie de l'amplificateur (13) assimilable à un court-circuit renvoyant sensiblement sans perte les signaux en provenance du premier bras (B1) du circulateur (14) ; et/ou
- la valeur de polarisation est ajustable en mode de fonctionnement radar en fonction d'une puissance de signal à émettre.

13. Procédé selon l'une quelconque des revendications 10 à 12, selon lequel le bras (B₂) du circulateur (14) est relié à la première voie d'émission (V1) et à une charge de dissipation (15).

14. Procédé selon la revendication 13, pour lequel on insère dans le module d'émission :
- un atténuateur (16) entre la seconde extrémité (E₂₂) de la seconde voie d'émission (V2) et le deuxième bras (B₂) du circulateur (14); et/ou
- un coupleur (17) adapté pour coupler la seconde voie d'émission et le deuxième bras (B₂) du circulateur (14) ; et/ou
- un autre commutateur (18) adapté pour dans le premier mode de fonctionnement isoler du deuxième bras (B₂) du circulateur (14), la première extrémité (E₂₁) de la seconde voie d'émission (V2) et pour, dans le second mode de fonctionnement, connecter le deuxième bras (B₂) du circulateur (14) et la seconde extrémité (E₂₂) de la seconde voie d'émission (V2). ; et/ou
- un autre circulateur (19) comprenant des bras (B₁ₛ, B₂ₛ, B₃ₛ) distincts et adapté pour faire circuler un signal dans un unique sens de rotation allant du troisième bras (B₃ₛ) vers le deuxième bras (B₂ₛ), du deuxième bras (B₂ₛ) vers le premier bras (B₁ₛ), et du premier bras (B₁ₛ) vers le troisième bras (B₃ₛ) le premier bras (B₁ₛ) étant relié à la seconde extrémité (E₂₂) de la seconde voie d'émission (V2), le troisième bras (B₃ₛ) étant relié au deuxième bras (B₂) du circulateur (14) et le deuxième bras (B₂ₛ) étant relié à la charge de dissipation (15).

15. Procédé de selon la revendication 14, comprenant une étape de réception d'une valeur de commande de puissance de signal à émettre, et dans lequel, en mode de fonctionnement radar, ladite valeur de commande agit sur ladite valeur de polarisation, et/ou en mode de fonctionnement liaison montante, ladite valeur de commande agit sur le niveau d'atténuation de l'atténuateur (16).

## Patentansprüche

1. Sendemodul (10, 20, 21), wobei das Modul zum Verknüpfen von zwei Betriebsmodi eingerichtet ist und aufweist
- einen Schalter (12), der einen Eingang aufweist, der zum Empfangen eines zu sendenden Signals eingerichtet ist, zum Umschalten zwischen zwei Ausgängen, wobei jeder einem Sendepfad (V1, V2) entspricht,
- einen Zirkulator (14), der mindestens einen ersten Arm, einen zweiten Arm und einen dritten Arm (B₁, B₂, B₃), die unterschiedlich sind, aufweist;
- einen ersten Sendepfad (V1) und einen zweiten Sendepfad (V2), wobei jeder ein erstes Ende aufweist, das mit dem ersten Schalter verbunden ist und ein zweites Ende aufweist, das mit dem Zirkulator verbunden ist;
wobei der Schalter eingerichtet ist, in einem ersten Operationsmodus selektiv den Eingang des Schalters mit dem ersten Ende (E₁₁) des ersten Sendepfads (V1) zu verbinden und in einem zweiten Operationsmodus mit dem ersten Ende (E₂₁) des zweiten Sendepfads (V2) zu verbinden;
wobei das Sendemodul dadurch charakterisiert ist, dass das zweite Ende (E₁₂) des ersten Sendepfads (V1) mit dem ersten Arm (B₁) des Zirkulators verbunden ist und das zweite Ende (E₂₂) des zweiten Sendepfads (V2) mit dem zweiten Arm (B₂) des Zirkulators verbunden ist.

2. Sendemodul (10, 20, 21) gemäß Anspruch 1, in dem der erste Betriebsmodus ein Radar-Betriebsmodus ist und der zweite Betriebsmodus ein Uplink-Betriebsmodus ist.

3. Sendemodul (10, 20, 21) gemäß Anspruch 2, in dem der Zirkulator (14) ein Kreisleitung aufweist, entlang der die drei Arme verteilt sind, wobei der Zirkulator eingerichtet ist, ein Signal in einem eindeutigen Rotationssinn zirkulieren zu lassen, der von dem dritten Arm (B₃) in Richtung des zweiten Arms (B₂), von dem zweiten Arm (B₂) in Richtung des ersten Arms (B₁) und von dem ersten Arm (B₁) in Richtung des dritten Arms (B₃) läuft.

4. Sendemodul (10, 20, 21) gemäß Anspruch 2 oder 3, in dem der erste Sendepfad (V1) einen Verstärker (13) aufweist, der mindestens einen Transistor aufweist, wobei das Sendemodul zum Befehlen der Anwendung eines Polarisationswerts auf die Eingangselektrode des Transistors und/oder eines Polarisationswerts auf die Ausgangselektrode des Transistors variabel gemäß dem gewählten Betriebsmodus eingerichtet ist.

5. Sendemodul (10, 20, 21) gemäß Anspruch 4, in dem:
- im Uplink-Betriebsmodus der Polarisationswert dazu eingerichtet ist, den Ausgang des Verstärkers (13) als Kurzschluss erscheinen zu lassen, der im Wesentlichen ohne Verlust die Signale, die von dem ersten Arm (B1) des Zirkulators (14) kommen, zurückschickt; und/oder
- im Radar-Betriebsmodus das Sendemodul zum Empfangen eines Werts zum Steuern der Stärke des zu sendenden Signals und zum Anpassen des Polarisationswerts in Abhängigkeit des empfangenen Werts zum Steuern eingerichtet ist.

6. Sendemodul (10, 20, 21) gemäß einem der Ansprüche 2 bis 5, in dem der zweite Arm (B₂) des Zirkulators (14) mit dem ersten Sendepfad (V1) und einer Dissipationslast (15) verbunden ist.

7. Sendemodul (10, 20, 21) gemäß einem der Ansprüche 2 bis 6, in dem das Sendemodul aufweist:
- ein Dämpfungsglied (16) zwischen dem zweiten Ende (E₂₂) des zweiten Sendepfads (V2) und dem zweiten Arm (B₂) des Zirkulators; und/oder
- einen Koppler (17), der zum Koppeln des zweiten Sendepfads und des zweiten Arms des Zirkulators eingerichtet ist; und/oder
- einen anderen Schalter (18), der eingerichtet ist zum, im ersten Betriebsmodus, Isolieren, von dem Arm (B₂) des Zirkulators (14), des ersten Endes (E₂₁) des zweiten Sendepfads (V2) und zum, im zweiten Betriebsmodus, Verbinden des zweiten Arms (B2) des Zirkulators (14) und des zweiten Endes (E₂₂) des zweiten Sendepfads (V2); und/oder
- einen anderen Zirkulator (19), der einen ersten, zweiten und dritten Arm (B₁ₛ, B₂ₛ, B₃ₛ) aufweist, die unterschiedlich sind, und eingerichtet ist, ein Signal in einem eindeutigen Rotationssinn zirkulieren zu lassen, der von dem dritten Arm (B₃ₛ) in Richtung des zweiten Arms (B₂ₛ), von dem zweiten Arm (B₂ₛ) in Richtung des ersten Arms (B₁ₛ) und von dem ersten Arm (B₁ₛ) in Richtung des dritten Arms (B₃ₛ) läuft, wobei der erste Arm (B₁ₛ) mit dem zweiten Ende (E₂₂) des zweiten Sendepfads (V2) verbunden ist, der dritte Arm (B₃ₛ) mit dem zweiten Arm (B₂) des Zirkulators (14) verbunden ist und der zweite Arm (B₂ₛ) mit einer Dissipationslast (15) verbunden ist.

8. Sendemodul (10, 20, 21) gemäß Anspruch 8, eingerichtet zum Empfangen eines Werts zum Steuern der Signalstärke und in dem im Uplink-Betriebsmodus der Wert zum Steuern das Dämpfungsniveau des Dämpfungsglieds (16) beeinflusst.

9. Verfahren zum Durchführen von mehreren Betriebsmodi in einem Sendemodul (10, 20, 21), das zum Verknüpfen von zwei Betriebsmodi eingerichtet ist und aufweist
- einen Schalter (12), der einen Eingang aufweist, der zum Empfangen eines zu sendenden Signals eingerichtet ist, zum Umschalten zwischen zwei Ausgängen, wobei jeder einem Sendepfad entspricht,
- einen Zirkulator (14), der mindestens einen ersten Arm, einen zweiten Arm und einen dritten Arm (B₁, B₂, B₃), die unterschiedlich sind, aufweist;
- einen ersten Sendepfad (V1) und einen zweiten Sendepfad (V2), wobei jeder ein erstes Ende aufweist, das mit dem ersten Schalter verbunden ist und ein zweites Ende aufweist, das mit dem Zirkulator verbunden ist;
wobei das Verfahren einen Schritt zum selektiven Verbinden, in einem ersten Operationsmodus, des Eingangs des Schalters mit dem ersten Ende (E₁₁) des ersten Sendepfads (V1) und in einem zweiten Operationsmodus mit dem ersten Ende (E₂₁) des zweiten Sendepfads (V2) aufweist;
wobei das Verfahren dadurch charakterisiert ist, dass es einen Schritt zum Signal-Zirkulieren in dem Zirkulator aufweist, gemäß dem der erste Arm (B₁) des Zirkulators mit dem zweiten Ende (E₁₂) des ersten Sendepfads (V1) verbunden ist und der zweite Arm (B₂) des Zirkulators mit dem zweiten Ende (E2₂) des zweiten Sendepfads (V2) verbunden ist.

10. Verfahren gemäß Anspruch 9, eingerichtet zum Verwenden gemäß einem ersten Radar-Betriebsmodus oder einem zweiten Uplink-Betriebsmodus.

11. Verfahren gemäß Anspruch 10, gemäß dem der Schritt zum Zirkulieren dazu eingerichtet ist, ein Signal in einem eindeutigen Rotationssinn zirkulieren zu lassen, der von dem dritten Arm (B₃) in Richtung des zweiten Arms (B₂), von dem zweiten Arm (B₂) in Richtung des ersten Arms (B₁) und von dem ersten Arm (B₁) in Richtung des dritten Arms (B₃) läuft.

12. Verfahren gemäß Anspruch 11, gemäß dem der erste Sendepfad (V1) einen Verstärker (13) aufweist, der mindestens einen Transistor aufweist, und einen Schritt zum Befehlen der Anwendung eines Polarisationswerts auf die Eingangselektrode des Transistors und/oder eines Polarisationswerts auf die Ausgangselektrode des Transistors variabel gemäß dem gewählten Betriebsmodus aufweist, gemäß dem:
- im Uplink-Betriebsmodus der Polarisationswert dazu eingerichtet ist, den Ausgang des Verstärkers (13) als Kurzschluss erscheinen zu lassen, der im Wesentlichen ohne Verlust die Signale, die von dem ersten Arm (B1) des Zirkulators (14) kommen, zurückschickt; und/oder
- der Polarisationswert im Radar-Betriebsmodus in Abhängigkeit der Stärke des zu sendenden Signals anpassbar ist.

13. Verfahren gemäß einem der Ansprüche 10 bis 12, gemäß dem der Arm (B₂) des Zirkulators (14) mit dem ersten Sendepfad (V1) und einer Dissipationslast (15) verbunden ist.

14. Verfahren gemäß Anspruch 13, für das man in das Sendemodul einfügt:
- ein Dämpfungsglied (16) zwischen dem zweiten Ende (E₂₂) des zweiten Sendepfads (V2) und dem zweiten Arm (B₂) des Zirkulators; und/oder
- einen Koppler (17), der zum Koppeln des zweiten Sendepfads und des zweiten Arms (B₂) des Zirkulators (14) eingerichtet ist; und/oder
- einen anderen Schalter (18), der eingerichtet ist zum, im ersten Betriebsmodus, Isolieren, von dem Arm (B₂) des Zirkulators (14), des ersten Endes (E₂₁) des zweiten Sendepfads (V2) und zum, im zweiten Betriebsmodus, Verbinden des zweiten Arms (B2) des Zirkulators (14) und des zweiten Endes (E₂₂) des zweiten Sendepfads (V2); und/oder
- einen anderen Zirkulator (19), der unterschiedliche Arme (B₁ₛ, B₂ₛ, B₃ₛ) aufweist und eingerichtet ist, ein Signal in einem eindeutigen Rotationssinn zirkulieren zu lassen, der von dem dritten Arm (B₃ₛ) in Richtung des zweiten Arms (B₂ₛ), von dem zweiten Arm (B₂ₛ) in Richtung des ersten Arms (B₁ₛ) und von dem ersten Arm (B₁ₛ) in Richtung des dritten Arms (B₃ₛ) läuft, wobei der erste Arm (B₁ₛ) mit dem zweiten Ende (E₂₂) des zweiten Sendepfads (V2) verbunden ist, der dritte Arm (B₃ₛ) mit dem zweiten Arm (B₂) des Zirkulators (14) verbunden ist und der zweite Arm (B₂ₛ) mit einer Dissipationslast (15) verbunden ist.

15. Verfahren gemäß Anspruch 14, aufweisend einen Schritt zum Empfangen eines Werts zum Steuern der Stärke des zu sendenden Signals und in dem im Radar-Betriebsmodus der Wert zum Steuern den Polarisationswert beeinflusst und/oder im Uplink-Betriebsmodus der Wert zum Steuern das Dämpfungsniveau des Dämpfungsglieds (16) beeinflusst.

## Claims

1. Transmission module (10, 20, 21), said module being adapted to associate two modes of operation, and including
- a switch (12) comprising an input adapted to receive a signal to be transmitted, to be switched between two outputs each corresponding to one transmission channel (V1, V2),
- a circulator (14) comprising at least a first arm, a second arm and a third arm (B₁; B₂, B₃) that are different;
- a first transmission channel (V1) and a second transmission channel (V2) each comprising a first end connected to said switch and a second end connected to said circulator;
said switch being adapted to connect selectively the input of the switch, in a first mode of operation, to the first end (E₁₁ of the first transmission channel (V1), and in a second mode of operation, to the first end (E₂₁) of the second transmission channel (V2);
said transmission module being **characterized in that** the second end (E₁₂) of the first transmission channel (V1) is connected to the first arm (B₁) of the circulator and the second end (E₂₂) of the second transmission channel (V2) is connected to the second arm (B₂) of the circulator.

2. Transmission module (10, 20, 21) according to claim 1, wherein the first mode of operation is a radar mode of operation and the second mode of operation is an uplink mode of operation.

3. Transmission module (10, 20, 21) according to claim 2, wherein the circulator (14) comprises a circular line along which the three arms are distributed, the circulator being adapted to circulate a signal in a single direction of rotation going from the third arm (B₃) to the second arm (B₂), from the second arm (B₂) to the first arm (B₁) and from the first arm (B₁) to the third arm (B₃).

4. Transmission module (10, 20, 21) according to either of claims 2 or 3, wherein the first transmission channel (V1) includes an amplifier (13) comprising at least one transistor, said transmission module being adapted to control the application of a polarisation value to the input electrode of the transistor and/or a polarisation value to the output electrode of the transistor, variable according to the selected mode of operation.

5. Transmission module (10, 20, 21) according to claim 4, wherein:
- in uplink operation mode, said polarisation value is adapted to make the output of the amplifier (13) comparable to a short-circuit, returning - essentially losslessly - the signals coming from the first arm (B₁) of the circulator (14); and/or
- in radar operation mode, said transmission module is adapted to receive a signal power control value to transmit, and to adjust said polarisation value in accordance with said control value received.

6. Transmission module (10, 20, 21) according to any one of claims 2 to 5, wherein the second arm (B₂) of the circulator (14) is connected to the first transmission channel (V1) and to a dissipation load (15).

7. Transmission module (10, 20, 21) according to any one of claims 2 to 6, wherein the transmission module comprises:
- an attenuator (16) between the second end (E₂₂) of the second transmission channel (V2) and the second arm (B₂) of the circulator; and/or
- a coupler (17) adapted to couple the second transmission channel and the second arm of the circulator; and/or
- another switch (18), adapted in the first mode of operation to isolate the first end (E₂₁) of the second transmission channel (V2) from the second arm (B₂) of the circulator (14), and in the second mode of operation, to connect the second arm (B₂) of the circulator (14) and the second end (E₂₂) of the second transmission channel (V2); and/or
- another circulator (19) comprising different first, second and third arms(B₁ₛ, B₂ₛ, B₃ₛ) and adapted to circulate a signal in a single direction of rotation going from the third arm (B₃ₛ) to the second arm (B₂ₛ), from the second arm (B₂ₛ) to the first arm (B₁ₛ), and from the first arm (B₁ₛ) to the third arm (B₃ₛ) the first arm (B₁ₛ) being connected to the second end (E₂₂) of the second transmission channel (V2), the third arm (B₃ₛ) being connected to the second arm (B₂) of the circulator (14) and the second arm (B₂ₛ) being connected to the dissipation load (15).

8. Transmission module (10, 20, 21) according to claim 7, adapted to receive a signal power control value, and wherein, in uplink operation mode, said control value acts on the attenuation level of the attenuator (16).

9. Method of implementing multiple modes of operation and a transmission module (10, 20, 21), adapted to associate two modes of operation, and including
- a switch (12) comprising an input adapted to receive a signal to be transmitted, to be switched between two outputs each corresponding to one transmission channel,
- a circulator (14) comprising at least a first arm, a second arm and a third arm (B₁; B₂, B₃) that are different;
- a first transmission channel (V1) and a second transmission channel (V2) each comprising a first end connected to said switch and a second end connected to said circulator;
said method comprising a step of selectively connecting the input of the switch, in the first mode of operation, to the first end (E₁₁) of the first transmission channel (V1) and, in the second mode of operation, the input of the switch to the first end (E₂₁) of the second transmission channel (V2);
said method being **characterized in that** it comprises a step of signal circulation in the circulator according to which the first arm (B₁) of the circulator is connected to the second end (E₁₂) of the first transmission channel (V1) and the second arm (B₂) of the circulator is connected to the second end (E₂₂) of the second transmission channel (V2).

10. Method according to claim 9 adapted to be used according to a first radar mode of operation or according to a second uplink mode of operation.

11. Method according to claim 10, according to which the circulation step is adapted to circulate a signal in a single direction of rotation going from the third arm, (B₃) to the second arm (B₂), from the second arm (B₂) to the first arm (B₁), and from the first arm (B₁) to the third arm (B₃).

12. Method according to claim 11, according to which the first transmission channel (V1) includes an amplifier (13) comprising at least one transistor, said transmission module being adapted to control the application of a polarisation value to the input electrode of the transistor and/or a polarisation value to the output electrode of the transistor, variable according to the selected mode of operation, according to which:
- in uplink operation mode, said polarisation value is adapted to make the output of the amplifier (13) comparable to a short-circuit, returning - essentially losslessly - the signals coming from the first arm (B1) of the circulator (14); and/or
- the polarisation value is adjustable in radar operation mode in accordance with a signal power to be emitted.

13. Method according to any one of claims 10 to 12, according to which the second arm (B₂) of the circulator (14) is connected to the first transmission channel (V1) and to a dissipation load (15).

14. Method according to claim 13, for which the following are inserted in the transmission module:
- an attenuator (16) between the second end (E₂₂) of the second transmission channel (V2) and the second arm (B₂) of the circulator (14); and/or
- a coupler (17) adapted to couple the second transmission channel and the second arm (B₂) of the circulator (14); and/or
- another switch (18), adapted in the first mode of operation to isolate the first end (E₂₁) of the second transmission channel (V2) from the second arm (B₂ of the circulator (14), and in the second mode of operation, to connect the second arm (B₂) of the circulator (14) and the second end (E₂₂) of the second transmission channel (V2).; and/or
- another circulator (19) comprising different first, second and third arms (B₁ₛ, B₂ₛ, B₃ₛ) and adapted to circulate a signal in a single direction of rotation going from the third arm (B₃ₛ) to the second arm (B₂ₛ), from the second arm (B₂ₛ) to the first arm (B₁ₛ), and from the first arm (B₁ₛ) to the third arm (B₃ₛ) the first arm (B₁ₛ) being connected to the second end (E₂₂) of the second transmission channel (V2), the third arm (B₃ₛ) being connected to the second arm (B₂) of the circulator (14) and the second arm (B₂ₛ) being connected to the dissipation load (15).

15. Method according to claim 14, comprising a step of reception of a signal power command value to be transmitted, and wherein, in radar operation mode, said command value acts on said the polarisation value, and/or in uplink operation mode, said command value acts on the attenuation level of the attenuator (16).
